# EUROPÄISCHE PATENTSCHRIFT

(11) **EP 3 316 147 B1**
(45) Veröffentlichungstag und Bekanntmachung des Hinweises auf die Patenterteilung: **29.07.2020**
(21) Anmeldenummer: 17199036.9
(22) Anmeldetag: 27.10.2017
(51) Int. Cl.: G06F 13/38, G06F 13/40

(54) **DATENÜBERTRAGUNGSVORRICHTUNG, VERFAHREN ZUR ÜBERTRAGUNG VON DATEN MIT EINER DATENÜBERTRAGUNGSVORRICHTUNG UND SYSTEMANORDNUNG**
DATA TRANSMISSION DEVICE, METHOD FOR THE TRANSMISSION OF DATA WITH A DATA TRANSMISSION DEVICE AND SYSTEM ASSEMBLY
DISPOSITIF DE TRANSMISSION DE DONNÉES, PROCÉDÉ DE TRANSMISSION DE DONNÉES DOTÉ D'UN DISPOSITIF DE TRANSMISSION DE DONNÉES ET AGENCEMENT DE SYSTÈME

(30) Priorität: 31.10.2016 DE 102016120769
(43) Veröffentlichungstag der Anmeldung: 02.05.2018
(73) Patentinhaber: HTV Cyperion GmbH, 64625 Bensheim (DE)
(72) Erfinder: Liess, Martin Dieter, 65239 Hochheim (DE); Mößinger, Gunter, 64625 Bensheim (DE); Krumme, Holger, 64653 Lorsch (DE); Grote, Klaus Edbill, 64342 Seeheim-Jugenheim (DE); Maletic, Annemarie, 67549 Worms (DE); Tröller, Thilo Bernhard, 68642 Bürstadt (DE)
(74) Vertreter: Habermann Intellectual Property Partnerschaft von Patentanwälten mbB

(56) Entgegenhaltungen:
- EP-A2- 1 164 766
- US-A- 6 026 502
- US-A1- 2006 184 784
- US-A1- 2008 028 146
- US-A1- 2009 328 183

## Beschreibung

Die Erfindung betrifft eine Datenübertragungsvorrichtung zur Übertragung von Daten zwischen einem ersten und einem zweiten Datenverarbeitungssystem. Zudem betrifft die Erfindung ein Verfahren zur Übertragung von Daten mit einer Datenübertragungsvorrichtung. Schließlich betrifft die Erfindung auch eine Systemanordnung mit einem ersten und einem zweiten Datenverarbeitungssystem und mit einer Datenübertragungsvorrichtung.

Um Daten zwischen Datenverarbeitungssystemen wie beispielsweise Arbeitsplatz-PCs, Servern und Smartphones oder dergleichen zu übertragen, ist es aus dem Stand der Technik bekannt, die verschiedenen Datenverarbeitungssysteme datenleitend bzw. datenübertragend miteinander zu verbinden. Zu diesem Zweck können die Datenverarbeitungssysteme beispielsweise bei der Netzwerkverbindung dauerhaft datenleitend miteinander verbunden sein. Es ist aber auch möglich, dass Daten zwischen den Datenverarbeitungssystemen beispielsweise über geeignete Datenträger wie USB-Sticks übertragen werden, so dass über den Datenträger eine datenübertragende Verbindung zwischen den Datenverarbeitungssystemen hergestellt werden kann. Eine datenübertragende Verbindung zwischen oder mehreren Datenverarbeitungssystemen kann auch durch entsprechende Funksysteme wie beispielsweise über W-LAN oder GSM erfolgen. Aus dem Stand der Technik sind zahlreiche Verfahren bekannt, um Daten zwischen verschiedenen Datenverarbeitungssystemen zu übertragen.

Über die datenübertragenden Verbindungen zwischen verschiedenen Datenverarbeitungssystemen können Hacker-Angriffe ermöglicht und das Einbringen von Schadsoftware von einem Datenverarbeitungssystem auf ein anderes Datenverarbeitungssystem ermöglicht werden. Um dies zu vermeiden, ist es aus dem Stand der Technik bekannt, geeignete Firewalls und Anti-Viren-Programme einzusetzen.

Sofern Datenverarbeitungssysteme in Bereichen eingesetzt werden sollen, in denen besondere Sicherheitsanforderungen an die Datenverarbeitungssysteme gestellt werden und ein besonders zuverlässiger Betrieb der Datenverarbeitungssysteme erreicht werden soll, wird häufig auf eine dauerhaft datenleitende Verbindung zwischen den Datenverarbeitungssystemen verzichtet. In solchen Arbeitsumgebungen wird häufig ein Datenverarbeitungssystem als sicheres Datenverarbeitungssystem verwendet, das beispielsweise mit einem besonders gesicherten Unternehmensdatennetz verbunden ist, über das sensible Daten zwischen den über das Unternehmensdatennetz verbundenen verschiedenen Datenverarbeitungssysteme ausgetauscht wird. Allerdings ist eine solche Trennung von sicheren Datenverarbeitungssystemen und unsicheren Datenverarbeitungssystemen in der Praxis nicht möglich, da auch eine Datenübertragung auf das sichere Datenverarbeitungssystem von vermeintlich unsicheren Datenverarbeitungssystemen oder umgekehrt erforderlich ist. So sind beispielsweise die in geeigneten Datenbanken gespeicherten Informationen häufig besonders schützenswert, müssen aber gleichzeitig beispielsweise über das Internet einer Vielzahl von Nutzern zur Verfügung gestellt werden, so dass eine datenübertragende Verbindung zwischen dem die Datenbank beinhaltenden Datenverarbeitungssystem und weiteren Datenverarbeitungssystemen erforderlich ist.

Sofern in bestimmten Anmeldungsbereichen auf eine dauerhafte datenübertragende Verbindung zwischen unsicheren und beispielsweise mit dem Internet verbundenen Datenverarbeitungssystemen und sicheren und beispielsweise mit einem Unternehmensdatennetz verbundenen Datenverarbeitungssystemen nicht erforderlich ist, sondern eine gelegentliche Übertragung von Daten von den unsicheren auf die sicheren Datenverarbeitungssysteme ausreichend erscheint, werden zu diesem Zweck häufig Datenträger verwendet. Um zu vermeiden, dass Schadsoftware über die Datenträger auf das bzw. die sicheren Datenträgerverarbeitungssysteme übertragen wird, sind aus dem Stand der Technik sogenannte Kopierstationen bekannt, in die der Datenträger nach der Übertragung von dem unsicheren Datenverarbeitungssystem auf den Datenträger eingebracht wird und in dem die auf dem Datenträger gespeicherten Daten überprüft werden. Auf diese Weise kann vermieden werden, dass Schadsoftware über den Datenträger auf das sichere Datenverarbeitungssystem übertragen wird. Allerdings ist die Verwendung eines solchen Systems besonders aufwändig und nicht in allen Anwendungsfällen möglich, da die Daten zunächst von dem unsicheren Datenverarbeitungssystem auf den Datenträger übertragen werden müssen, anschließend der Datenträger manuell in die Kopierstation eingebracht werden muss und dort überprüft werden muss und daraufhin der Datenträger von der Kopierstation in das sichere Datenverarbeitungssystem eingebracht werden muss, so dass eine dauerhafte datenübertragende Verbindung, die eine automatische Übertragung der Daten ermöglicht, erreicht werden kann. In US2006/0184784 A1 sind zwei verschiedene Varianten einer Datenübertragungseinrichtung beschrieben. Die Druckschrift US 6 026 502 offenbart eine Speicherumschalteinrichtung.

Als Aufgabe der Erfindung wird es daher angesehen, die aus dem Stand der Technik bekannten Datenübertragungsvorrichtungen so weiter zu entwickeln, dass Hacker-Angriffe ausgehend von einem ersten Datenverarbeitungssystem auf ein zweites Datenverarbeitungssystem und die Übertragung von Schadsoftware von dem ersten Datenverarbeitungssystem auf das zweite Datenverarbeitungssystem wirkungsvoll vermieden werden und gleichzeitig eine benutzerfreundliche und möglichst automatisch ablaufende Datenübertragung zwischen dem ersten Datenverarbeitungssystem und dem zweiten Datenverarbeitungssystem ermöglicht wird.

Diese Aufgabe wird erfindungsgemäß durch eine Datenverarbeitungsvorrichtung zur Übertragung von Daten zwischen einem ersten und einem zweiten Datenverarbeitungssystem nach Anspruch 1 gelöst.

Da keine direkte datenleitende Verbindung zwischen dem ersten Datenverarbeitungssystem und dem zweiten Datenverarbeitungssystem besteht, können Hacker-Angriffe von dem ersten Datenverarbeitungssystem auf das zweite Datenverarbeitungssystem wirkungsvoll vermieden werden. Auf diese Weise kann das erste Datenverarbeitungssystem beispielsweise mit dem Internet verbunden werden, während das zweite Datenverarbeitungssystem mit dem besonders geschützten Unternehmensdatennetz verbunden ist. Bei einem anderen Einsatzzweck ist es beispielsweise auch möglich, dass auf dem zweiten Datenverarbeitungssystem eine Datenbank ausgeführt wird und eine auf dem ersten Datenverarbeitungssystem ausgeführte Server-Anwendung Daten von der Datenbank über die Datenübertragungsvorrichtung abfragen und empfangen kann. Auf diese Weise können besonders einfach Daten zwischen dem ersten und dem zweiten Datenverarbeitungssystem über die Datenspeichereinrichtung übertragen werden, ohne dass es erforderlich ist, die zu übertragenden Daten manuell über einen Datenträger von dem ersten Datenverarbeitungssystem auf das zweite Datenverarbeitungssystem zu übertragen. Durch die Verwendung der Speicherumschaltereinrichtung kann die Übertragung der Daten zwischen dem ersten Datenverarbeitungssystem und dem zweiten Datenverarbeitungssystem über die Datenspeichereinrichtung ohne besonderes Zutun des Benutzers auf eine Kopieranweisung des Benutzers hin oder automatisch erfolgen, so dass die Übertragung der Daten zwischen dem ersten Verarbeitungssystem und dem zweiten Datenverarbeitungssystem vergleichbar komfortabel wie die aus dem Stand der Technik bekannte Übertragung der Daten von einem Speicherort auf einen anderen Speicherort erfolgen kann.

Erfindungsgemäß ist es vorteilhafterweise vorgesehen, dass mit Hilfe der Datenübertragungsvorrichtung mehrere Datenverarbeitungssysteme datenübertragend miteinander verbunden werden. Hierzu ist vorteilhafterweise vorgesehen, dass die Speicherumschaltereinrichtung datenleitende Verbindungen zwischen einer vorgegebenen, beliebigen Anzahl von Datenverarbeitungssystemen mit der Speichereinrichtung herstellen kann. Die Speicherumschaltereinrichtung kann erfindungsgemäß mehrere Speicherumschalter wie beispielsweise Relais und die Datenspeichereinrichtung mehrere Datenspeicher aufweisen. Die in den Patentansprüchen verwendeten Formulierungen im Hinblick auf eine datenübertragende Verbindung zwischen einem ersten und einem zweiten Datenverarbeitungssystem sind nicht dahingehend zu verstehen, dass die erfindungsgemäße Datenübertragungsvorrichtung lediglich und ausschließlich dazu geeignet ist, sichere, datenübertragende Verbindungen zwischen zwei Datenverarbeitungssystemen herzustellen, sondern sind vielmehr dahingehend zu verstehen, dass die Datenübertragungsvorrichtung mindestens zwei Datenverarbeitungssysteme datenübertragend miteinander verbinden kann.

Um insbesondere Hacker-Angriffe von dem ersten Datenverarbeitungssystem auf das zweite Datenverarbeitungssystem wirkungsvoll vermeiden zu können, ist erfindungsgemäß vorgesehen, dass keine unmittelbar datenleitende Verbindung zwischen dem ersten Datenverarbeitungssystem und dem zweiten Datenverarbeitungssystem besteht. Dadurch, dass die Datenübertragung ausschließlich über die Datenspeichereinrichtung erfolgt, kann bei einem Hacker-Angriff auf das erste Datenverarbeitungssystem nicht unmittelbar auf das zweite Datenverarbeitungssystem zugegriffen werden.

Um die Übertragung von Schadsoftware von dem ersten Datenverarbeitungssystem auf das zweite Datenverarbeitungssystem über die Datenspeichereinrichtung wirkungsvoll zu vermeiden, ist erfindungsgemäß vorgesehen, dass die Datenübertragungsvorrichtung eine Datenüberprüfungseinrichtung aufweist, wobei die Datenüberprüfungseinrichtung über die Speicherumschaltereinrichtung datenleitend mit der Datenspeichereinrichtung verbindbar ist und wobei die Datenüberprüfungseinrichtung auf der Datenspeichereinrichtung gespeicherte Datensätze überprüfen und von der Datenspeichereinrichtung entfernen kann, wenn die Speicherumschaltereinrichtung eine datenleitende Verbindung zwischen der Datenüberprüfungseinrichtung und der Datenspeichereinrichtung herstellt. Die Datenüberprüfungseinrichtung kann beispielsweise einen herkömmlichen oder aus dem Stand der Technik bekannten Viren-Scanner aufweisen und erfindungsgemäß zusätzlich auch beispielsweise überprüfen, ob die auf der Datenspeichereinrichtung gespeicherten Daten vorgegebenen Prüfkriterien entsprechen. Bei diesen Prüfkriterien kann es sich erfindungsgemäß beispielsweise um einen Dateityp, eine Dateigröße und/oder vergleichbare Dateiparameter der aus der Datenspeichereinrichtung hinterlegten Daten handeln. Beispielsweise ist es erfindungsgemäß möglich, dass die Datenüberprüfungseinrichtung überprüft, welchen Datentyps die auf der Datenspeichereinrichtung hinterlegten Daten entsprechen und zum Beispiel ausschließlich als ASCIIkodierte Textdateien für die Übertragung auf das zweite Datenverarbeitungssystem zulässt.

Um zu vermeiden, dass Daten ohne Überprüfung durch die Datenüberprüfungseinrichtung auf das sichere Datenverarbeitungssystem übertragen werden können, ist erfindungsgemäß vorgesehen, dass die Speicherumschaltereinrichtung in Abhängigkeit der Schaltstellung der Speicherumschaltereinrichtung ausschließlich eine datenübertragende Verbindung zwischen der Datenspeichereinrichtung und dem ersten Datenverarbeitungssystem oder der Datenspeichereinrichtung und dem zweiten Datenverarbeitungssystem herstellt oder ausschließlich eine datenübertragende Verbindung zwischen der Datenspeichereinrichtung und der Datenüberprüfungseinrichtung herstellt. Um sicherzustellen, dass sämtliche von dem ersten Datenverarbeitungssystem auf die Datenspeichereinrichtung übertragenen Daten von der Datenüberprüfungseinrichtung überprüft werden, ist erfindungsgemäß vorgesehen, dass vor jeder Verbindung der Datenspeichereinrichtung mit dem zweiten Datenverarbeitungssystem die Datenspeichereinrichtung mit der Datenüberprüfungseinrichtung verbunden wird.

Mit der voranstehenden Datenübertragungsvorrichtung kann durch eine erfindungsgemäße Unterbrechung und Verbindung einzelner Teilabschnitte bewirkt werden, dass einerseits eine leitungsgebundene Datenübertragung zwischen dem ersten Datenverarbeitungssystem und dem zweiten Datenverarbeitungssystem möglich ist und andererseits jederzeit sichergestellt werden kann, dass zu irgendeinem Zeitpunkt eine durchgehende datenübertragende leitungsgebundene Verbindung zwischen dem ersten und dem zweiten Datenverarbeitungssystem existiert, die für einen Angriff auf die Sicherheit des sicheren Datenverarbeitungssystems missbraucht werden könnte.

Eine besonders sichere und gleichzeitig für einen Benutzer komfortable Übertragung zwischen dem sicheren Datenverarbeitungssystem und dem unsicheren Datenverarbeitungssystem kann erfindungsgemäß dadurch erreicht werden, dass die Datenübertragungsvorrichtung eine Datenüberprüfungseinrichtung aufweist, wobei die Datenspeichereinrichtung einen ersten Datenspeicher und einen zweiten Datenspeicher aufweist, wobei die Speicherumschaltereinrichtung einen ersten Speicherumschalter und einen zweiten Speicherumschalter aufweist, wobei der erste Speicherumschalter eine Verbindung des ersten Datenspeichers mit dem ersten Datenverarbeitungssystem und mit der Datenüberprüfungseinrichtung herstellen kann, wobei der zweite Speicherumschalter eine Verbindung des zweiten Datenspeichers mit dem zweiten Datenverarbeitungssystem und mit der Datenüberprüfungseinrichtung herstellen kann, wobei der erste Speicherumschalter in Abhängigkeit einer Schaltstellung des ersten Speicherumschalters ausschließlich eine datenübertragende leitungsgebundene Verbindung über mindestens einen elektrischen oder optischen Leiter zwischen dem ersten Datenspeicher und dem ersten Datenverarbeitungssystem herstellt oder ausschließlich eine datenübertragende leitungsgebundene Verbindung zwischen dem ersten Datenspeicher und der Datenüberprüfungseinrichtung herstellt, wobei der zweite Speicherumschalter in Abhängigkeit einer Schaltstellung des zweiten Speicherumschalters ausschließlich eine datenübertragende leitungsgebundene Verbindung über mindestens einen elektrischen oder optischen Leiter zwischen dem zweiten Datenspeicher und dem zweiten Datenverarbeitungssystem herstellt oder ausschließlich eine datenübertragende leitungsgebundene Verbindung zwischen dem zweiten Datenspeicher und der Datenüberprüfungseinrichtung herstellt und wobei der erste Datenspeicher und der zweite Datenspeicher über die Datenüberprüfungseinrichtung datenübertragend miteinander verbunden werden können. Bei dieser Ausgestaltung des Erfindungsgedankens wird durch die Verwendung physikalisch getrennter Datenspeicher in Kombination mit für jeden Datenspeicher gesondert zugeordneten Speicherumschaltern in der Datenübertragungseinrichtung ebenfalls bewirkt, dass zu keinem Zeitpunkt die an die Datenübertragungseinrichtung angeschlossenen ersten und zweiten Datenverarbeitungssysteme über eine durchgehende datenübertragende leitungsgebundene Verbindung miteinander verbunden sind. Im Unterschied zu der vorangehend beschriebenen Ausführungsform, bei der jeweils nur entweder das erste Datenverarbeitungssystem oder das zweite Datenverarbeitungssystem mit der Datenübertragungsvorrichtung verbunden sein können, ist es bei dieser Ausgestaltung des Erfindungsgedankens möglich, dass sowohl das erste als auch das zweite Datenverarbeitungssystem gleichzeitig mit der Datenübertragungsvorrichtung verbunden sind. Die für eine Vermeidung eines Missbrauchs der datenübertragenden leitenden Verbindung notwendige Unterbrechung wird durch die dem ersten und dem zweiten Datenverarbeitungssystem jeweils zugeordneten und physikalisch voneinander getrennten Datenspeicher in der Datenübertragungsvorrichtung und die jedem Datenspeicher zugeordneten Speicherumschalter bewirkt.

Es sind verschiedene Betriebsmodi für diese erfindungsgemäße Datenübertragungsvorrichtung denkbar. Alle Speicherumschalter können miteinander synchronisiert entweder den jeweils zugeordneten Datenspeicher mit dem damit leitungsgebunden verbundenen ersten oder zweiten Datenverarbeitungssystem verbunden sein, oder in einer anderen Schaltstellung eine gleichzeitige Verbindung aller Datenspeicher mit der Datenüberprüfungseinrichtung herstellen. Dadurch kann sichergestellt werden, dass entweder nur die angeschlossenen ersten und zweiten Datenverarbeitungssysteme mit der Datenübertragungsvorrichtung verbunden sind und die Unterbrechung der leitungsgebundenen Verbindung durch die Trennung der Datenspeicher gewährleistet wird, oder dass nur die Datenspeicher über die Datenüberprüfungseinrichtung miteinander verbunden sind, und weder das erste noch das zweite Datenverarbeitungssystem einen leitungsgebundenen Zugriff auf die Datenübertragungsvorrichtung hat.

Es ist ebenfalls denkbar, dass die Speicherumschalter unabhängig voneinander betrieben bzw. zwischen den beiden Schaltstellungen umgeschaltet werden können. Durch die physikalische Trennung des ersten Datenspeichers und des zweiten Datenspeichers in der Datenübertragungsvorrichtung, die nur durch die Speicherumschalter überbrückt werden kann, kann zwischen den angeschlossenen ersten und zweiten Datenverarbeitungssystemen keine durchgehende datenübertragende leitungsgebundene Verbindung bestehen.

Bei dem ersten Speicherumschalter und dem zweiten Speicherumschalter kann es sich erfindungsgemäß beispielsweise um Relais oder elektronische Schalter handeln. Als erster und zweiter Datenspeicher können vorteilhafterweise handelsübliche Solid-State-Disks bzw. USB-Sticks verwendet werden.

Bis auf die vorangehend dargelegte unterschiedliche Ausgestaltung der internen Datenspeicher und der Speicherumschalter sind die vorangehend beschriebenen Datenübertragungsvorrichtungen hinsichtlich der jeweiligen Funktionsweise und der Verwendungsmöglichkeiten weitgehend gleich. Es können jeweils auch mehrere erste Datenverarbeitungssysteme und/oder mehrere zweite Datenverarbeitungssysteme mit der Datenübertragungsvorrichtung verbunden sein. Im Falle von mehreren Datenspeichern, die den verschiedenen Datenübertragungssystemen zugeordnet sind, können für alle ersten Datenverarbeitungssysteme ein einziger erster Datenspeicher und für alle zweiten Datenverarbeitungssysteme ein zweiter Datenspeicher in der Datenübertragungsvorrichtung vorgesehen sein. Es ist auch möglich und eventuell hinsichtlich des Benutzerkomforts zweckmäßig, dass für jedes angeschlossene erste Datenverarbeitungssystem ein zugeordneter erster Datenspeicher und für jedes angeschlossene zweite Datenverarbeitungssystem ein zugeordneter zweiter Datenspeicher vorgesehen ist, so dass die Kommunikation der einzelnen Datenverarbeitungssysteme mit dem zugeordneten ersten oder zweiten Datenspeicher in der Datenübertragungsvorrichtung unabhängig voneinander erfolgen kann und nicht notwendigerweise synchronisiert erfolgen muss.

Vorteilhafterweise ist erfindungsgemäß vorgesehen, dass zur Datenübertragung zwischen dem ersten Datenspeicher und dem zweiten Datenspeicher beide Datenspeicher über die Speicherumschaltereinrichtung mit der Datenüberprüfungseinrichtung verbunden werden können. Auf diese Weise kann eine Datenübertragung zwischen dem ersten Datenspeicher und dem zweiten Datenspeicher ohne vollständige Zwischenspeicherung der zu übertragenden Daten auf der Datenüberprüfungseinrichtung erfolgen.

Eine besonders sichere Datenübertragung wird erfindungsgemäß dadurch erreicht, dass über die Speicherumschaltereinrichtung ausschließlich datenleitende Verbindungen des ersten Datenverarbeitungssystems oder mehrerer erster Datenverarbeitungssysteme, des zweiten Datenverarbeitungssystems oder mehrerer zweiter Datenverarbeitungssysteme und der Datenüberprüfungseinrichtung mit der Datenspeichereinrichtung herstellbar sind. Auf diese Weise kann auch eine sichere Datenübertragung zwischen mehreren ersten und mehreren zweiten Datenverarbeitungssystemen über die Speicherumschaltereinrichtung erreicht werden. Zu diesem Zweck kann die Speicherumschaltereinrichtung einen oder mehrere Speicherumschalter wie beispielsweise Relais aufweisen. Zudem ist es erfindungsgemäß vorgesehen, dass die Datenspeichereinrichtung mehrere Datenspeicher umfasst, wobei die Datenspeicher über einen oder mehrere Speicherumschalter mit den verschiedenen ersten und zweiten Datenverarbeitungssystemen sowie der Datenüberprüfungseinrichtung verbunden werden können.

Die datenübertragende Verbindung kann beispielsweise mit einer drahtlosen Datenübertragungseinrichtung ermöglicht werden, wobei eine drahtlose Punkt-zu-Punkt-Verbindung oder eine leitungsvermittelnde drahtlose Datenübertragung vorteilhaft sind. Gemäß einer besonders vorteilhaften Ausgestaltung des Erfindungsgedankens ist vorgesehen, dass die datenübertragende Verbindung zwischen dem Datenspeicher und dem ersten Datenverarbeitungssystem oder dem zweiten Datenverarbeitungssystem leitungsgebunden über mindestens einen elektrischen oder optischen Leiter erfolgt. Bei einer drahtgebundenen oder über einen optischen Leiter erfolgenden Datenübertragung kann ein unbefugtes Abhören der Datenübertragung erschwert oder vollständig verhindert werden. Zudem kann ausgeschlossen werden, dass von außerhalb der kabelgebundenen oder über einen optischen Leiter erfolgenden leitungsgebundenen Verbindung eine unbefugte Datenübertragung veranlasst wird.

Vorteilhafterweise ist erfindungsgemäß vorgesehen, dass die Speicherumschaltereinrichtung mindestens einen elektrischen Schalter zum Umschalten der datenleitenden Verbindungen zwischen dem ersten Datenverarbeitungssystem und der Datenspeichereinrichtung bzw. dem zweiten Datenverarbeitungssystem und der Datenspeichereinrichtung aufweist. Bei dem elektrischen Schalter kann es sich erfindungsgemäß um ein Relais oder einen elektronischen Schalter handeln.

Um die Datenübertragung zwischen den ersten Datenverarbeitungssystemen und den zweiten Datenverarbeitungssystemen auszulösen, ist erfindungsgemäß vorgesehen, dass die Schaltstellung bzw. die Schaltstellungen durch eine Benutzereingabe vorgegeben wird bzw. werden.

Um das Einbringen beispielsweise von Schadsoftware möglichst zu vermeiden, ist erfindungsgemäß vorgesehen, dass eine Betriebssoftware der Datenübertragungsvorrichtung, vorzugsweise der Datenüberprüfungseinrichtung nicht veränderbar ist. Auf diese Weise wird erreicht, dass die Datenüberprüfungsvorrichtung die auf der Datenspeichereinrichtungen gespeicherten Daten jederzeit überprüfen kann, ohne dass die Gefahr besteht, dass die für die Überprüfung der Daten erforderliche Betriebssoftware durch auf die Datenspeichereinrichtung übertragene Schadsoftware beschädigt oder verändert wird. Dadurch kann eine Manipulation insbesondere der Datenüberprüfungseinrichtung vermieden werden.

Um eine einfache Wiederherstellung eines Ausgangszustands des ersten Datenverarbeitungssystems oder des zweiten Datenverarbeitungssystems zu ermöglichen, wenn das erste oder das zweite Datenverarbeitungssystem beispielsweise durch Schadsoftware kompromittiert wurde, ist erfindungsgemäß vorgesehen, dass die Datenübertragungsvorrichtung einen von dem ersten und/oder dem zweiten Datenverarbeitungssystem nicht beschreibbaren jedoch lesbaren Sicherheitsspeicher aufweist. Auf dem Sicherheitsspeicher ist vorteilhafterweise ein Abbild einer Betriebssoftware des ersten und/oder zweiten Datenverarbeitungssystems hinterlegt. Dieses Abbild kann jederzeit von dem Sicherheitsspeicher auf das erste bzw. zweite Datenverarbeitungssystem übertragen werden, um das jeweilige Datenverarbeitungssystem wieder in einen Ausgangszustand zurückzuversetzen. Diese Übertragung kann nutzergesteuert, in regelmäßigen Abständen oder auch bei Bedarf automatisiert beispielsweise durch einen Virenscanner oder auch durch die Datenüberprüfungseinrichtung ausgelöst werden, wenn ein Hacker-Angriff oder Schadsoftware festgestellt wird. Der nicht beschreibbare Sicherheitsspeicher kann nur von einem befugten Nutzer, beispielsweise ein Administrator der Datenübertragungsvorrichtung, ausnahmsweise mit einem neuen Abbild einer Betriebssoftware oder mit neuen sicheren Daten beschrieben werden. Um dies zu ermöglichen muss die Datenübertragungsvorrichtung in einen gesonderten Administrationsmodus versetzt werden. In dem Administrationsmodus ist vorteilhafter Weise keine Datenübertragung zwischen angeschlossenen Datenverarbeitungssystemen möglich.

Die Erfindung betrifft auch ein Verfahren zur Übertragung von Daten mit einer wie voranstehend beschriebenen Datenübertragungsvorrichtung von dem ersten Datenverarbeitungssystem auf das zweite Datenverarbeitungssystem nach Anspruch 9. Auf diese Weise können Hacker-Angriffe von dem ersten Datenverarbeitungssystem auf das zweite Datenverarbeitungssystem und die Übertragung von Schadsoftware auf das zweite Datenübertragungssystem wirkungsvoll vermieden werden. Vorteilhafterweise ist erfindungsgemäß vorgesehen, dass die Datenüberprüfungseinrichtung die Daten löscht, wenn die Daten die vorgegebenen Prüfkriterien nicht erfüllen. Gemäß einer besonders vorteilhaften Ausgestaltung des erfindungsgemäßen Verfahrens ist vorgesehen, dass die datenübertragende Verbindung zwischen dem ersten Datenverarbeitungssystem und der Datenspeichereinrichtung und/oder zwischen dem zweiten Datenverarbeitungssystem und der Datenspeichereinrichtung leitungsgebunden über einen elektrischen oder optischen Leiter hergestellt wird. Vorteilhafterweise ist erfindungsgemäß vorgesehen, dass die Speicherumschaltereinrichtung lediglich einen Speicherumschalter beispielsweise ein Relais und lediglich einen Datenspeicher beispielsweise einen USB-Stick aufweist. Bereits durch diese minimale Konfiguration der Datenübertragungsvorrichtung ist eine sichere Datenübertragung zwischen dem unsicheren Datenverarbeitungssystem und dem sicheren Datenverarbeitungssystem möglich.

Der Benutzer kann die einzelnen Verfahrensschritte jeweils nacheinander einleiten. Es ist gemäß einer vorteilhaften Ausgestaltung des Erfindungsgedankens vorgesehen, dass die Datenübertragung zwischen dem ersten Datenverarbeitungssystem zu der Datenspeichereinrichtung und/oder die Datenübertragung zwischen der Datenspeichereinrichtung zu dem zweiten Datenverarbeitungssystem automatisiert eingeleitet wird, bzw. durchgeführt wird, so dass keine gesonderte Benutzereingabe erforderlich wird.

Erfindungsgemäß ist vorteilhafterweise vorgesehen, dass die vorgegebenen Prüfkriterien ein Datengrößenkriterium, ein Datendateinamenkriterium, ein Datendateitypkriterium und/oder ein Dateninhaltkriterium umfassen. Auf diese Weise kann beispielsweise überprüft werden, ob es sich bei den zu übertragenden Daten bzw. den in Dateien auf der Datenspeichereinrichtung gespeicherten Daten um ASCIIkodierte Textdateien handelt, die von dem unsicheren Datenverarbeitungssystem auf das sichere Datenverarbeitungssystem übertragen werden dürfen oder ob es sich beispielsweise um Binär-Dateien handelt, die ausführbare Programme beinhalten, welche nicht von dem ersten Datenverarbeitungssystem auf das zweite Datenverarbeitungssystem übertragen werden können sollen.

Vorteilhafterweise ist erfindungsgemäß vorgesehen, dass die Daten während der Übertragung zwischen dem ersten Datenverarbeitungssystem und dem zweiten Datenverarbeitungssystem durch die Datenübertragungsvorrichtung verschlüsselt werden, wobei ein Schlüssel zur Ver- und Entschlüsselung der Daten ausschließlich in der Datenübertragungsvorrichtung hinterlegt ist. Auf diese kann vorteilhafterweise erreicht werden, dass bei einer Kompromittierung des ersten Datenverarbeitungssystems ein unerwünschtes entschlüsseln verschlüsselter Daten erschwert wird, da der Schlüssel ausschließlich in der Datenübertragungsvorrichtung gespeichert ist. Beispielsweise ist es erfindungsgemäß möglich, dass ein Benutzer der Datenverarbeitungssysteme eine verschlüsselte E-Mail über das Internet auf dem ersten Datenverarbeitungssystem erhält. Der Schlüssel zum Entschlüsseln der Nachricht ist ausschließlich in der Datenübertragungsvorrichtung hinterlegt. Bei der Übertragung der E-Mail von dem ersten auf das zweite und mit einem Unternehmensdatennetz verbundene Datenverarbeitungssystem wird die E-Mail von der Datenübertragungsvorrichtung automatisiert entschlüsselt und kann auf dem zweiten Datenverarbeitungssystem verarbeitet werden. Umgekehrt ist es möglich, dass auf dem zweiten Datenverarbeitungssystem erstellte Daten bei der Übertragung an das erste Datenverarbeitungssystem automatisiert durch die Datenübertragungsvorrichtung verschlüsselt werden. Diese verschlüsselten Daten können anschließend Dritten über das Internet bereitgestellt werden.

Die Erfindung betrifft auch eine Systemanordnung mit einem ersten und einem zweiten Datenverarbeitungssystem und mit einer wie voranstehend beschriebenen Datenübertragungsvorrichtung, wobei das erste Datenverarbeitungssystem und das zweite Datenverarbeitungssystem über die Datenübertragungsvorrichtung datenübertragend miteinander verbunden sind. Das erste Datenverarbeitungssystem kann beispielsweise mit dem Internet verbunden sein und das zweite Datenverarbeitungssystem mit einem sicheren Unternehmensdatennetz verbunden sein. Über die erfindungsgemäße Datenübertragungsvorrichtung kann eine sichere datenübertragende Verbindung zwischen den Datenverarbeitungssystemen hergestellt werden, wobei zu keiner Zeit eine unmittelbar datenleitende Verbindung zwischen den Datenverarbeitungssystemen besteht, sondern die gesamte Datenübertragung über die Datenübertragungsvorrichtung und die zugehörige Datenspeichereinrichtung erfolgt.

Vorteilhafterweise ist erfindungsgemäß vorgesehen, dass die Systemanordnung mehrere erste Datenverarbeitungssysteme aufweist, die jeweils über die Speicherumschaltereinrichtung mit der Datenspeichereinrichtung verbindbar sind und über die Datenübertragungsvorrichtung mit dem zweiten Datenverarbeitungssystem Daten austauschen können. Zu diesem Zweck kann die Speicherumschaltereinrichtung erfindungsgemäß einen oder mehrere Speicherumschalter wie beispielsweise Relais und einen oder mehrere über die Speicherumschaltereinrichtung mit den Datenübertragungsvorrichtungen verbindbare Datenspeicher wie beispielsweise USB-Sticks aufweisen.

Es ist auch möglich und erfindungsgemäß vorgesehen, dass die Systemanordnung mehrere erste Datenverarbeitungssysteme und mehrere Datenübertragungsvorrichtungen aufweist, wobei jedes erste Datenverarbeitungssystem über eine der mehreren Datenübertragungsvorrichtungen datenübertragend mit dem zweiten Datenverarbeitungssystem verbunden sind. Auf diese Weise können weiterhin Daten von einigen der ersten Datenübertragungssysteme auf das zweite Datenübertragungssystem übertragen werden, selbst wenn eine oder mehrere der Datenübertragungseinrichtungen ausfallen sollten. Erfindungsgemäß weisen die Datenübertragungsvorrichtungen vorteilhafterweise jeweils Datenüberprüfungseinrichtungen auf, sodass bei einem Ausfall einer Datenübertragungsvorrichtung weiterhin auch eine möglichst sichere Datenübertragung erreicht wird.

Bei einer besonders vorteilhaften Ausgestaltung der erfindungsgemäßen Systemanordnung ist vorgesehen, dass die Systemanordnung mehrere zweite Datenverarbeitungssysteme aufweist, wobei jedes erste Datenverarbeitungssystem über eine oder mehrere Datenübertragungsvorrichtungen datenübertragend mit mindestens einem der zweiten Datenverarbeitungssysteme verbunden ist. Auf diese Weise können mehrere erste und zweite Datenverarbeitungssysteme durch die sicheren Datenübertragungsvorrichtungen datenübertragend miteinander verbunden werden, sodass weiterhin Daten von einigen der ersten Datenübertragungssysteme auf einige der zweiten Datenübertragungssysteme übertragen werden können, wenn eine oder mehrere der Datenübertragungseinrichtungen ausfallen sollten.

Mit der erfindungsgemäßen Datenübertragungsvorrichtung, bzw. mit dem erfindungsgemäßen Verfahren kann jedwede Datenübertragung zwischen zwei beliebigen Datenverarbeitungssystemen sicher ausgestaltet werden. Falls zunächst zwischen einem ersten Datenverarbeitungssystem und einem zweiten Datenverarbeitungssystem und anschließend zwischen dem ersten Datenverarbeitungssystem und einem dritten Datenverarbeitungssystem eine erfindungsgemäße Datenübertragung erfolgt, kann das erste Datenübertragungssystem für die erste Datenübertragung als ein sicheres Datenübertragungssystem angesehen werden, während dasselbe erste Datenübertragungssystem für die zweite Datenübertragung als unsicheres Datenverarbeitungssystem angesehen wird.

Weitere vorteilhafte Ausgestaltungen der Erfindung werden anhand von in der Zeichnung dargestellten Ausführungsbeispielen näher erläutert.

Es zeigt:
Figur 1 eine schematische Darstellung einer Datenübertragungseinrichtung mit einem Datenspeicher und einem Speicherumschalter zur Übertragung von Daten zwischen einem ersten Datenverarbeitungssystem und einem zweiten Datenverarbeitungssystem,
Figur 2 die in Figur 1 schematisch dargestellte Datenübertragungseinrichtung, wobei zusätzlich ein EA-Umschalter zur gemeinsamen Verwendung von Ein- und Ausgabegeräten mit dem ersten Datenverarbeitungssystem und dem zweiten Datenverarbeitungssystem vorgesehen ist,
Figur 3 eine schematische Darstellung einer Datenübertragungsvorrichtung mit einem Datenspeicher und mit einem Speicherumschalter, wobei über die Datenübertragungsvorrichtung datenübertragende Verbindungen zwischen drei Datenverarbeitungssystemen hergestellt werden kann,
Figur 4 eine schematische Darstellung der in Figur 3 dargestellten Datenübertragungsvorrichtung, wobei die Speicherumschaltereinrichtung abstrahiert dargestellt ist,
Figur 5 eine schematische Darstellung einer Datenübertragungsvorrichtung zur Übertragung von Daten zwischen drei Datenverarbeitungssystemen, wobei eine Datenüberprüfungseinrichtung einer Datenspeichereinrichtung sowie eine Steuerung zur Ansteuerung der Speicherumschaltereinrichtung ein gemeinsames Bauteil bilden,
Figur 6 eine schematische Darstellung einer Datenübertragungsvorrichtung zur Datenübertragung zwischen drei Datenverarbeitungssystemen, wobei ein EA-Umschalter zur gemeinsamen Nutzung von Eingabe- und Ausgabegeräten mit den drei Datenverarbeitungssystemen vorgesehen ist,
Figur 7 eine schematisch dargestellte Datenübertragungsvorrichtung zur Übertragung von Daten zwischen zwei Datenverarbeitungssystemen, wobei die Datenübertragungsvorrichtung zwei Datenspeicher aufweist und
Figur 8 eine schematisch dargestellte Datenübertragungsvorrichtung zwischen drei Datenverarbeitungssystemen, wobei die Datenübertragungsvorrichtung drei Datenspeicher sowie drei Speicherumschalter aufweist.

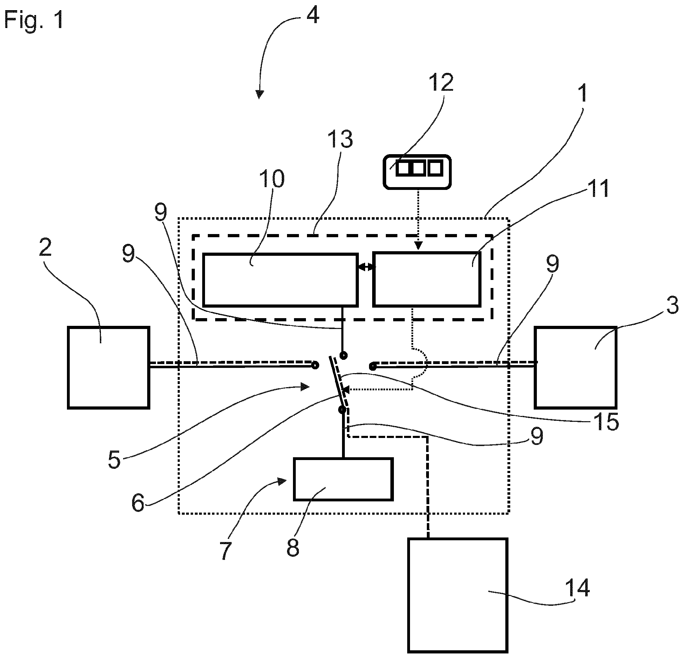

Figur 1 zeigt eine schematische Darstellung einer Datenübertragungsvorrichtung 1 zur Übertragung von Daten zwischen einem ersten Datenverarbeitungssystem 2 und einem zweiten Datenverarbeitungssystem 3. Die Datenübertragungsvorrichtung 1 sowie das erste Datenverarbeitungssystem 2 und das zweite Datenverarbeitungssystem 3 bilden eine Systemanordnung 4.

Die Datenübertragungsvorrichtung 1 weist eine Speicherumschaltereinrichtung 5 bestehend aus einem Speicherumschalter 6 auf. Zudem weist die Datenübertragungsvorrichtung 1 eine Datenspeichereinrichtung 7 bestehend aus einem Datenspeicher 8 auf.

Mit Hilfe des Speicherumschalters 6 kann eine datenübertragende leitungsgebundene Verbindung über elektrische Leiter 9 zwischen dem ersten Datenverarbeitungssystem 2 und dem Datenspeicher 8, dem Datenspeicher 8 und einer Datenüberprüfungseinrichtung 10 der Datenübertragungsvorrichtung 1 sowie zwischen dem Datenspeicher 8 und dem zweiten Datenverarbeitungssystem 3 hergestellt werden. Die Steuerung des Speicherumschalters 6 erfolgt über ein Steuerungsmodul 11, welches sowohl von der Datenüberprüfungseinrichtung 10 als auch von einem externen Bediengerät 12 Steuerbefehle entgegennehmen und in entsprechende Schaltbefehle für den Speicherumschalter 6 umwandeln kann. Bei dem Speicherumschalter 6 handelt es sich um ein Relais. Die Datenüberprüfungseinrichtung 10 und das Steuermodul 11 sind in einem gemeinsamen Mikrocontroller 13 ausgeführt.

Die Systemanordnung 4 weist zudem verschiedene Eingabe- und Ausgabegeräte 14 auf, die über einen EA-Umschalter 15 mit dem ersten Datenverarbeitungssystem 2 oder dem zweiten Datenverarbeitungssystem 3 verbunden werden können. Der EA-Umschalter 15 wird ebenfalls über das Steuerungsmodul 11 angesteuert, wobei eine Schaltstellung des EA-Umschalters 15 jeweils einer Schaltstellung des Speicherumschalters 6 entspricht, sodass die Eingabe- und Ausgabegeräte 14 grundsätzlich mit dem Datenverarbeitungssystem 2, 3 verbunden sind, mit dem auch der Datenspeicher 8 verbunden ist.

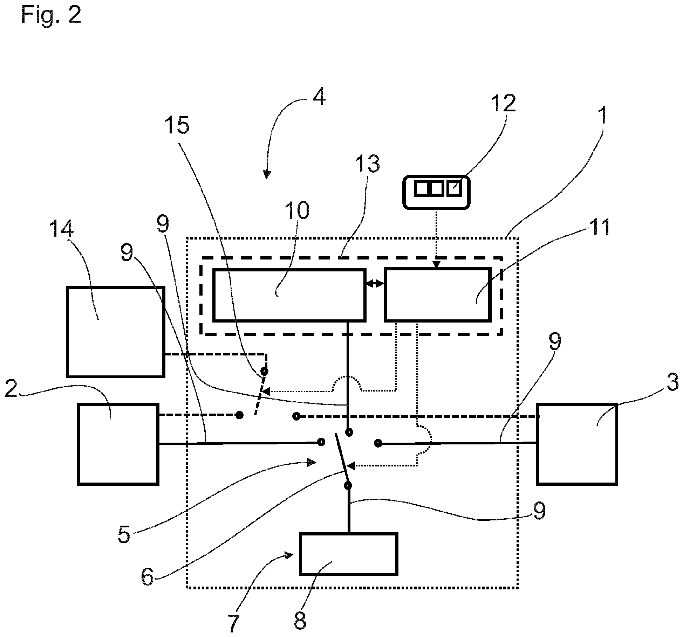

Figur 2 zeigt eine schematische Darstellung einer Datenübertragungsvorrichtung 1, wobei eine Schaltstellung eines EA-Umschalters 15 unabhängig von einer Schaltstellung eines Speicherumschalters 6 vorgegeben werden kann. Die Ansteuerung des EA-Umschalters 15 erfolgt wiederum über ein Steuerungsmodul 11, welches seinerseits vorteilhafterweise durch einen Benutzer des ersten Datenverarbeitungssystems 2 und des zweiten Datenverarbeitungssystems 3 über ein Bedienelement 12 kontrolliert werden kann.

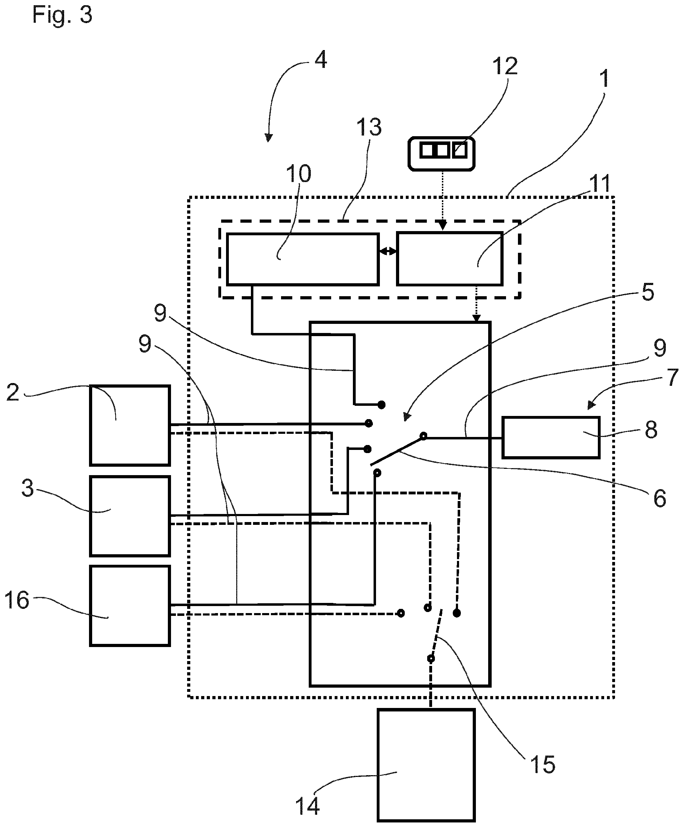

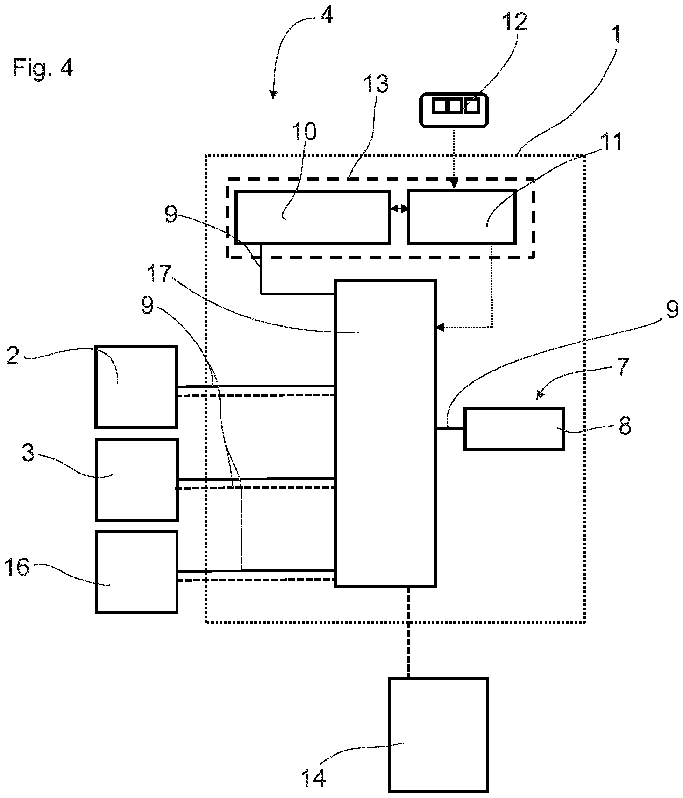

Figuren 3 und 4 zeigen schematische Darstellungen einer Systemanordnung 4, wobei die Systemanordnung 4 eine Datenübertragungsvorrichtung 1 zur Herstellung einer datenübertragenden Verbindung zwischen einem ersten Datenverarbeitungssystem 2, einem zweiten Datenverarbeitungssystem 3 und einem dritten Datenverarbeitungssystems 16 aufweist. Die Datenübertragungsvorrichtung 1 weist ein Speicherumschalter 6 auf, wobei der Speicherumschalter 6 jeweils datenübertragende Verbindungen zwischen den Datenverarbeitungssystemen 2, 3, 16 und einem Datenspeicher 8 sowie einer Datenüberprüfungseinrichtung 10 herstellen kann. Der Speicherumschalter 6 bzw. eine Speicherumschaltereinrichtung 5 und ein EA-Umschalter 15 sind Teil einer Schalteinrichtung 17.

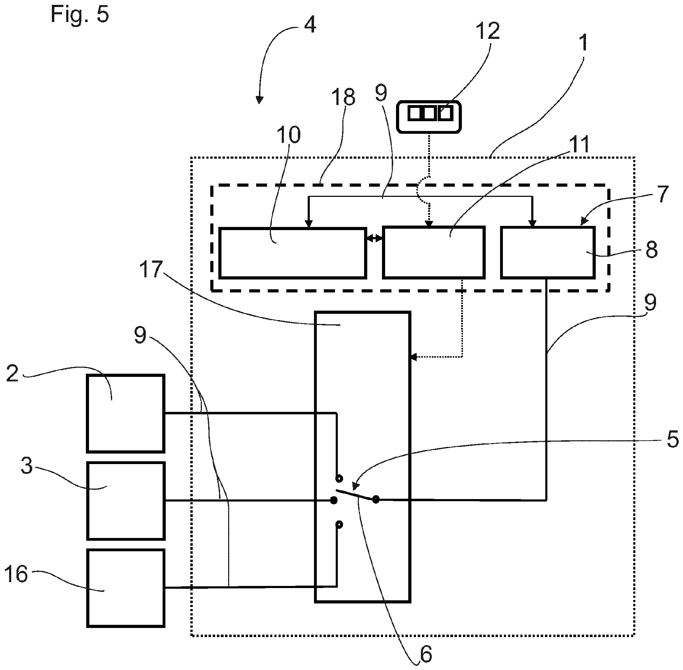

Figur 5 zeigt eine schematische Darstellung einer Systemanordnung 4, wobei ein Datenspeicher 8 gemeinsam mit einer Datenüberprüfungseinrichtung 10 sowie einem Steuerungsmodul 11 als Teil eines gemeinsamen Bauteils 18 ausgeführt ist. Bei dem gemeinsamen Bauteil 18 kann es sich vorteilhafterweise um einen Mikrocomputer handeln.

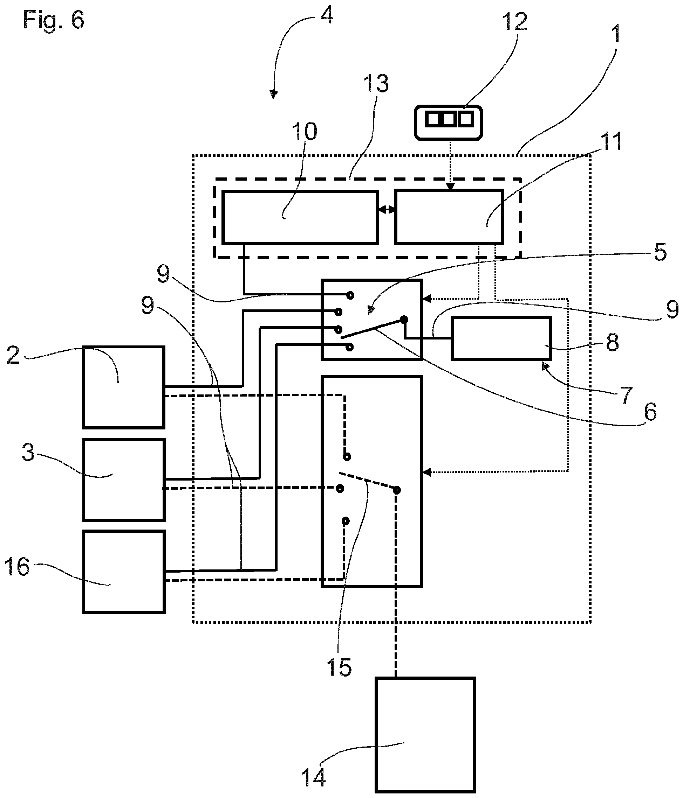

Figur 6 zeigt eine schematische Darstellung einer Systemanordnung 4, wobei ein Speicherumschalter 6 und ein EA-Umschalter 15 getrennt voneinander ausgeführt sind. Schaltstellungen des Speicherumschalters 6 sowie des EA-Umschalters 15 können unabhängig voneinander von einem Steuerungsmodul 11 vorgegeben werden.

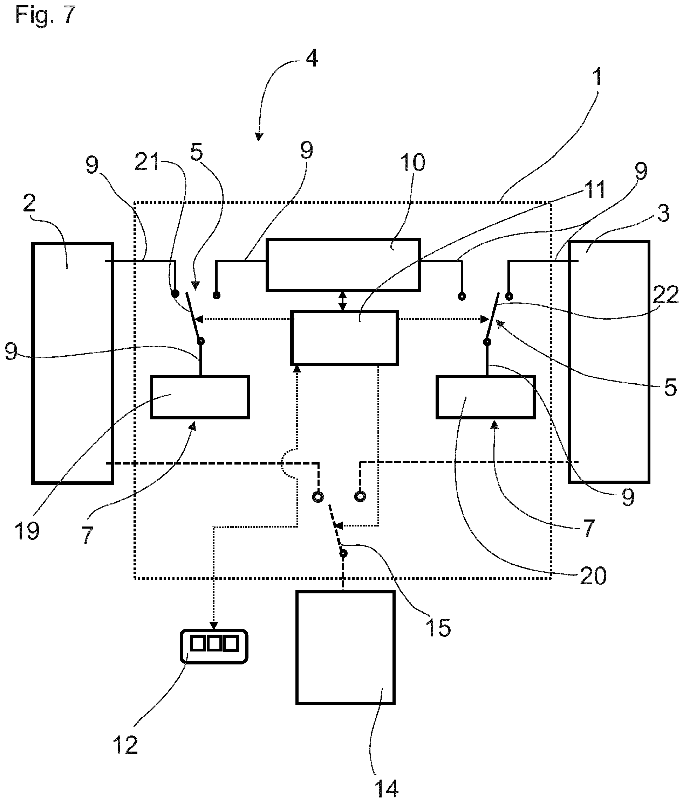

Figur 7 zeigt eine schematisch dargestellte Ansicht einer Systemanordnung 4 mit einer Datenübertragungsvorrichtung 1, wobei die Datenübertragungsvorrichtung 1 einen ersten Datenspeicher 19 und einen zweiten Datenspeicher 20 aufweist. Eine Speicherumschaltereinrichtung 5 weist einen ersten Speicherumschalter 21 und einen zweiten Speicherumschalter 22 auf.

Der erste Speicherumschalter 21 kann eine datenleitende Verbindung des ersten Datenspeichers 19 mit dem ersten Datenverarbeitungssystem 2 sowie eine datenleitende Verbindung zwischen dem ersten Datenspeicher 19 und einer Datenüberprüfungseinrichtung 10 jeweils über elektrische Leiter 9 herstellen. Der zweite Speicherumschalter 22 kann eine datenleitende Verbindung zwischen der Datenüberprüfungseinrichtung 10 und dem zweiten Datenspeicher 20 sowie zwischen dem zweiten Datenspeicher 20 und einem zweiten Datenverarbeitungssystem 3 ebenfalls jeweils über elektrische Leiter 9 herstellen.

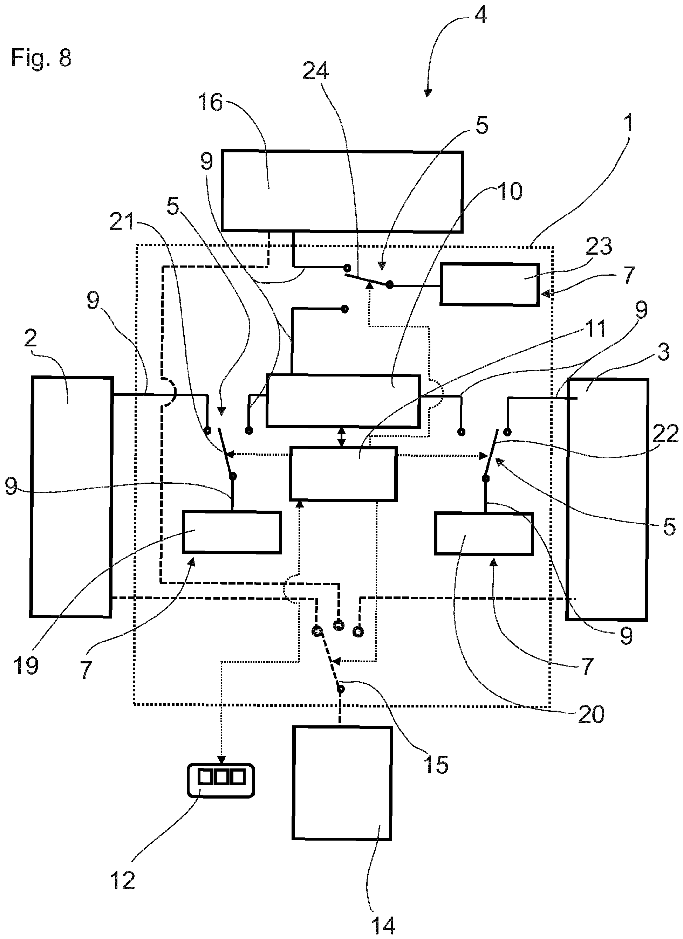

Figur 8 zeigt eine schematische Darstellung einer Systemanordnung 4 mit einer Datenübertragungsvorrichtung 1 zur Herstellung einer datenübertragenden Verbindung zwischen drei Datenverarbeitungssystemen 2, 3, 16. Zur Herstellung der datenübertragenden Verbindung weist die Datenübertragungsvorrichtung 1 einen ersten Datenspeicher 19, einen zweiten Datenspeicher 20 sowie einen dritten Datenspeicher 23 auf. Eine Speicherumschaltereinrichtung 5 weist einen ersten Speicherumschalter 21, einen zweiten Speicherumschalter 22 sowie einen dritten Speicherumschalter 24 auf. Die Speicherumschalter 21, 22, 24 können jeweils datenleitende Verbindungen zwischen den zugeordneten Datenspeichern 19, 20, 23 sowie den ebenfalls zugeordneten Datenverarbeitungssystemen 2, 3, 15 über elektrische Leiter 9 herstellen.

## Patentansprüche

1. Datenübertragungsvorrichtung (1) zur Übertragung von Daten zwischen einem ersten (2) und einem zweiten Datenverarbeitungssystem (3) mit einer Speicherumschaltereinrichtung (5) und mit einer Datenspeichereinrichtung (7), wobei die Speicherumschaltereinrichtung (5) eine Verbindung der Datenspeichereinrichtung (7) mit dem ersten Datenverarbeitungssystem und mit dem zweiten Datenverarbeitungssystem herstellen kann, wobei die Speicherumschaltereinrichtung (5) in Abhängigkeit einer Schaltstellung der Speicherumschaltereinrichtung (5) ausschließlich eine datenübertragende Verbindung zwischen der Datenspeichereinrichtung (7) und dem ersten Datenverarbeitungssystem (2) oder der Datenspeichereinrichtung (7) und dem zweiten Datenverarbeitungssystem (3) herstellt oder jegliche Verbindung der Datenverarbeitungssysteme (2, 3) zu der Datenspeichereinrichtung (7) unterbricht, und wobei die Datenübertragungsvorrichtung (1) eine Datenüberprüfungseinrichtung (10) aufweist, **dadurch gekennzeichnet, dass** die Datenüberprüfungseinrichtung (10) über die Speicherumschaltereinrichtung (5) datenleitend mit der Datenspeichereinrichtung (7) verbindbar ist und dass die Datenüberprüfungseinrichtung (10) auf der Datenspeichereinrichtung (7) gespeicherte Datensätze überprüfen und von der Datenspeichereinrichtung (7) entfernen kann, wenn die Speicherumschaltereinrichtung (5) eine datenleitende Verbindung zwischen der Datenüberprüfungseinrichtung (10) und der Datenspeichereinrichtung (7) herstellt.

2. Datenübertragungsvorrichtung (1) gemäß Anspruch 1, **dadurch gekennzeichnet, dass** die Speicherumschaltereinrichtung (5) in Abhängigkeit der Schaltstellung der Speicherumschaltereinrichtung (5) ausschließlich eine datenübertragende leitungsgebundene Verbindung über den mindestens einen elektrischen oder optischen Leiter (9) zwischen der Datenspeichereinrichtung (7) und dem ersten Datenverarbeitungssystem (2) oder der Datenspeichereinrichtung (7) und dem zweiten Datenverarbeitungssystem (3) herstellt oder ausschließlich eine datenübertragende leitungsgebundene Verbindung zwischen der Datenspeichereinrichtung (7) und der Datenüberprüfungseinrichtung (10) herstellt.

3. Datenübertragungsvorrichtung (1) gemäß einem der voranstehenden Ansprüche, **dadurch gekennzeichnet, dass** die datenübertragende Verbindung zwischen dem Datenspeicher (7, 19, 20) und dem ersten Datenverarbeitungssystem (2) und/oder dem zweiten Datenverarbeitungssystem (3) leitungsgebunden über mindestens einen elektrischen oder optischen Leiter (9) erfolgt.

4. Datenübertragungsvorrichtung (1) gemäß einem der voranstehenden Ansprüche 2 oder 3, **dadurch gekennzeichnet, dass** über die Speicherumschaltereinrichtung (5) ausschließlich datenleitende Verbindungen des ersten Datenverarbeitungssystems (2) oder mehrerer erster Datenverarbeitungssysteme (2), des zweiten Datenverarbeitungssystems (3) oder mehrerer zweiter Datenverarbeitungssysteme (3) und der Datenüberprüfungseinrichtung (10) mit der Datenspeichereinrichtung (7) herstellbar sind.

5. Datenübertragungsvorrichtung (1) gemäß einem der voranstehenden Ansprüche, **dadurch gekennzeichnet, dass** die Speicherumschaltereinrichtung (5) mindestens einen elektrischen Schalter zum Umschalten der datenleitenden Verbindungen zwischen dem ersten Datenverarbeitungssystem (2) und der Datenspeichereinrichtung (7) bzw. dem zweiten Datenverarbeitungssystem (3) und der Datenspeichereinrichtung (7) aufweist.

6. Datenübertragungsvorrichtung (1) gemäß einem der voranstehenden Ansprüche, **dadurch gekennzeichnet, dass** die Schaltstellung bzw. die Schaltstellungen durch eine Benutzereingabe vorgegeben wird bzw. werden.

7. Datenübertragungsvorrichtung (1) gemäß einem der voranstehenden Ansprüche, **dadurch gekennzeichnet, dass** eine Betriebssoftware der Datenübertragungsvorrichtung (1), vorzugsweise der Datenüberprüfungseinrichtung (10) nicht veränderbar ist.

8. Datenübertragungsvorrichtung (1) gemäß einem der voranstehenden Ansprüche, **dadurch gekennzeichnet, dass** die Datenübertragungsvorrichtung (1) einen von dem ersten (2) und/oder dem zweiten Datenverarbeitungssystem (3) nicht beschreibbaren jedoch lesbaren Sicherheitsspeicher aufweist.

9. Verfahren zur Übertragung von Daten mit einer Datenübertragungsvorrichtung (1) gemäß einem der Ansprüche 1 bis 8 von dem ersten Datenverarbeitungssystem (2) auf das zweite Datenverarbeitungssystem (3), wobei die Übertragung durch einen Benutzer des ersten und des zweiten Datenverarbeitungssystems (2, 3) oder automatisch eingeleitet wird, wobei anschließend eine datenübertragende Verbindung ausschließlich zwischen der Datenspeichereinrichtung (7) und dem ersten Datenverarbeitungssystem (2) durch die Speicherumschaltereinrichtung (5) hergestellt wird, wobei anschließend die zu übertragenden Daten auf die Datenspeichereinrichtung (7) übertragen werden, wobei anschließend ausschließlich die Datenüberprüfungseinrichtung (10) mit Hilfe der Speicherumschalteinrichtung (5) mit der Datenspeichereinrichtung (7) verbunden wird und die Datenüberprüfungseinrichtung (10) die auf der Datenspeichereinrichtung (7) gespeicherten Daten überprüft, wobei die Datenüberprüfungseinrichtung (10) die Speicherumschaltereinrichtung (5) dazu veranlasst, eine datenübertragende leitungsgebundene Verbindung ausschließlich zwischen der Datenspeichereinrichtung (7) und dem zweiten Datenverarbeitungssystem (3) durch die Speicherumschaltereinrichtung (5) herzustellen, wenn die Daten die vorgegebenen Prüfkriterien erfüllen und wobei anschließend die Daten von der Datenspeichereinrichtung (7) auf das zweite Datenverarbeitungssystem (3) übertragen werden.

10. Verfahren nach Anspruch 9, **dadurch gekennzeichnet, dass** die Datenübertragung von dem ersten Datenverarbeitungssystem (2) zu der Datenspeichereinrichtung (7) und/oder die Datenübertragung von der Datenspeichereinrichtung (7) zu dem zweiten Datenverarbeitungssystem (3) automatisiert eingeleitet wird, bzw. durchgeführt wird.

11. Verfahren gemäß einem der Ansprüche 9 oder 10, **dadurch gekennzeichnet, dass** die Daten während der Übertragung zwischen dem ersten Datenverarbeitungssystem (2) und dem zweiten Datenverarbeitungssystem (3) durch die Datenübertragungsvorrichtung (1) verschlüsselt werden, wobei ein Schlüssel zur Ver- und Entschlüsselung der Daten ausschließlich in der Datenübertragungsvorrichtung (1) hinterlegt ist.

12. Systemanordnung (4) mit einem ersten und einem zweiten Datenverarbeitungssystem (2, 3) und mit einer Datenübertragungsvorrichtung (1) gemäß einem der Ansprüche 1 bis 8, wobei das erste Datenverarbeitungssystem (2) und das zweite Datenverarbeitungssystem (3) über die Datenübertragungsvorrichtung (1) datenübertragend miteinander verbunden sind.

13. Systemanordnung (4) gemäß Anspruch 12, **dadurch gekennzeichnet, dass** die Systemanordnung (4) mehrere erste Datenverarbeitungssysteme (2) aufweist, die jeweils über die Speicherumschaltereinrichtung (5) mit der Datenspeichereinrichtung (7) verbindbar sind und über die Datenübertragungsvorrichtung (1) mit dem zweiten Datenverarbeitungssystem (3) Daten austauschen können.

14. Systemanordnung (4) gemäß Anspruch 12, **dadurch gekennzeichnet, dass** die Systemanordnung (4) mehrere erste Datenverarbeitungssysteme (2) und mehrere Datenübertragungsvorrichtungen (1) aufweist, wobei jedes erste Datenverarbeitungssystem (2) über eine der mehreren Datenübertragungsvorrichtungen (1) datenübertragend mit dem zweiten Datenverarbeitungssystem (3) verbunden ist.

15. Systemanordnung (4) gemäß einem der Ansprüche 12 bis 14, **dadurch gekennzeichnet, dass** die Systemanordnung (4) mehrere zweite Datenverarbeitungssysteme (3) aufweist, wobei jedes erste Datenverarbeitungssystem (2) über eine oder mehrere Datenübertragungsvorrichtungen (1) datenübertragend mit mindestens einem der zweiten Datenverarbeitungssysteme (3) verbunden ist.

## Claims

1. Data transmission device (1) for transmitting data between a first data-processing system (2) and a second data-processing system (3), comprising a memory switch apparatus (5) and a data memory apparatus (7), wherein the memory switch apparatus (5) is able to establish a connection of the data memory apparatus (7) to the first data-processing system and to the second data-processing system, wherein the memory switch apparatus (5) only establishes a data-routing connection between the data memory apparatus (7) and the first data-processing system (2) or the data memory apparatus (7) and the second data-processing system (3) or interrupts any connection between the data-processing systems (2, 3) and the data memory apparatus (7) on the basis of a switch position of the memory switch apparatus (5), and wherein the data transmission device (1) comprises a data verification apparatus (10), **characterised in that** the data verification apparatus (10) can be connected to the data memory apparatus (7) in a data-routing manner via the memory switch apparatus (5), and **in that** the data verification apparatus (10) can verify data sets stored on the data memory apparatus (7) and remove said data sets from the data memory apparatus (7) if the memory switch apparatus (5) establishes a data-transmitting connection between the data verification apparatus (10) and the data memory apparatus (7).

2. Data transmission device (1) according to claim 1, **characterised in that** the memory switch apparatus (5) only establishes a data-transmitting, wired connection between the data memory apparatus (7) and the first data-processing system (2) or the data memory apparatus (7) and the second data-processing system (3) via the at least one electrical or optical conductor (9) or only establishes a data-transmitting, wired connection between the data memory apparatus (7) and the data verification apparatus (10) on the basis of the switch position of the memory switch apparatus (5).

3. Data transmission device (1) according to any of the preceding claims, **characterised in that** the data-transmitting connection between the data memory (7, 19, 20) and the first data-processing system (2) and/or the second data-processing system (3) occurs in a wired manner via at least one electrical or optical conductor (9).

4. Data transmission device (1) according to any of the preceding claims 2 or 3, **characterised in that**, via the memory switch apparatus (5), only data-routing connections of the first data-processing system (2) or a plurality of first data-processing systems (2), of the second data-processing system (3) or a plurality of second data-processing systems (3), and of the data verification apparatus (10) to the data memory apparatus (7) can be established.

5. Data transmission device (1) according to any of the preceding claims, **characterised in that** the memory switch apparatus (5) comprises at least one electrical switch for switching the data-routing connections between the first data-processing system (2) and the data memory apparatus (7) or the second data-processing system (3) and the data memory apparatus (7).

6. Data transmission device (1) according to any of the preceding claims, **characterised in that** the switch position or switch positions is/are predetermined by a user input.

7. Data transmission device (1) according to any of the preceding claims, **characterised in that** operating software of the data transmission device (1), preferably the data verification apparatus (10), cannot be changed.

8. Data transmission device (1) according to any of the preceding claims, **characterised in that** the data transmission device (1) comprises a safety memory that can be read but not written by the first data-processing system (2) and/or the second data-processing system (3).

9. Method for transmitting data, using a data transmission device (1) according to any of claims 1 to 8, from the first data-processing system (2) to the second data-processing system (3), wherein the transmission is initiated by a user of the first and the second data-processing system (2, 3) or automatically, wherein a data-transmitting connection is then established only between the data memory apparatus (7) and the first data-processing system (2) by the memory switch apparatus (5), wherein the data to be transmitted are then transmitted to the data memory apparatus (7), wherein the data verification apparatus (10) is then only connected to the data memory apparatus (7) by means of the memory switch apparatus (5) and the data verification apparatus (10) verifies the data stored on the data memory apparatus (7), wherein the data verification apparatus (10) prompts the memory switch apparatus (5) to establish a data-transmitting, wired connection only between the data memory apparatus (7) and the second data-processing system (3) by means of the memory switch apparatus (5) if the data fulfil the predetermined verification criteria, and wherein the data are then transmitted from the data memory apparatus (7) to the second data-processing system (3).

10. Method according to claim 9, **characterised in that** the data transmission from the first data-processing system (2) to the data memory apparatus (7) and/or the data transmission from the data memory apparatus (7) to the second data-processing system (3) is initiated or carried out automatically.

11. Method according to any of claims 9 or 10, **characterised in that** the data are encrypted during transmission between the first data-processing system (2) and the second data-processing system (3) by the data transmission device (1), wherein a key for encrypting and decrypting the data is only stored in the data transmission device (1).

12. System assembly (4) comprising a first and a second data-processing system (2, 3) and comprising a data transmission device (1) according to any of claims 1 to 8, wherein the first data-processing system (2) and the second data-processing system (3) are interconnected in a data-transmitting manner via the data transmission device (1).

13. System assembly (4) according to claim 12, **characterised in that** the system assembly (4) comprises a plurality of first data-processing systems (2), which can each be connected to the data memory apparatus (7) via the memory switch apparatus (5) and can exchange data with the second data-processing system (3) via the data transmission device (1).

14. System assembly (4) according to claim 12, **characterised in that** the system assembly (4) comprises a plurality of first data-processing systems (2) and a plurality of data transmission devices (1), wherein each first data-processing system (2) is connected to the second data-processing system (3) in a data-transmitting manner via one of the plurality of data transmission devices (1).

15. System assembly (4) according to any of claims 12 to 14, **characterised in that** the system assembly (4) comprises a plurality of second data-processing systems (3), wherein each first data-processing system (2) is connected to at least one of the second data-processing systems (3) in a data-transmitting manner via one or more data transmission devices (1) .

## Revendications

1. Dispositif de transmission de données (1) servant à la transmission de données entre un premier (2) et un deuxième système de traitement de données (3) avec un équipement commutateur de mémoire (5) et avec un équipement de stockage de données (7), dans lequel l'équipement commutateur de mémoire (5) peut établir une liaison de l'équipement de stockage de données (7) avec le premier système de traitement de données et avec le deuxième système de traitement de données, dans lequel l'équipement commutateur de mémoire (5) établit en fonction d'une position de commutation de l'équipement commutateur de mémoire (5) exclusivement une liaison à transmission de données entre l'équipement de stockage de données (7) et le premier système de traitement de données (2) ou l'équipement de stockage de données (7) et le deuxième système de traitement de données (3) ou interrompt toute liaison des systèmes de traitement de données (2, 3) avec l'équipement de mémorisation de données (7), et dans lequel le dispositif de transmission de données (1) présente un équipement de vérification de données (10), **caractérisé en ce que** l'équipement de vérification de données (10) peut être relié à l'équipement de stockage de données (7) de manière à acheminer des données par l'intermédiaire de l'équipement commutateur de mémoire (5), et que l'équipement de vérification de données (10) peut vérifier des jeux de données stockés sur l'équipement de stockage de données (7) et les supprimer de l'équipement de stockage de données (7) si l'équipement commutateur de mémoire (5) établit une liaison acheminement de données entre l'équipement de vérification de données (10) et l'équipement de stockage de données (7).

2. Dispositif de transmission de données (1) selon la revendication 1, **caractérisé en ce que** l'équipement commutateur de mémoire (5) établit en fonction de la position de commutation de l'équipement commutateur de mémoire (5) exclusivement une liaison filaire à transmission de données par l'intermédiaire de l'au moins un conducteur (9) électrique ou optique entre l'équipement de stockage de données (7) et le premier système de traitement de données (2) ou l'équipement de stockage de données (7) et le deuxième système de traitement de données (3) ou établit exclusivement une liaison filaire à transmission de données entre l'équipement de stockage de données (7) et l'équipement de vérification de données (10).

3. Dispositif de transmission de données (1) selon l'une quelconque des revendications précédentes, **caractérisé en ce que** la liaison à transmission de données entre la mémoire de données (7, 19, 20) et le premier système de traitement de données (2) et/ou le deuxième système de traitement de données (3) a lieu de manière filaire par l'intermédiaire d'au moins un conducteur électrique ou optique (9).

4. Dispositif de transmission de données (1) selon l'une quelconque des revendications 2 ou 3, **caractérisé en ce que** exclusivement des liaisons acheminement de données du premier système de traitement de données (2) ou de plusieurs premiers systèmes de traitement de données (2), du deuxième système de traitement de données (3) ou de plusieurs deuxièmes systèmes de traitement de données (3) et de l'équipement de vérification de données (10) peuvent être établies avec l'équipement de stockage de données (7) par l'intermédiaire de l'équipement commutateur de mémoire (5).

5. Dispositif de transmission de données (1) selon l'une quelconque des revendications précédentes, **caractérisé en ce que** l'équipement commutateur de mémoire (5) présente au moins un commutateur électrique servant à commuter les liaisons acheminement de données entre le premier système de traitement de données (2) et l'équipement de stockage de données (7) ou le deuxième système de traitement de données (3) et l'équipement de stockage de données (7).

6. Dispositif de traitement de données (1) selon l'une quelconque des revendications précédentes, **caractérisé en ce que** la position de commutation ou les positions de commutation est ou sont spécifiées par une saisie d'utilisateur.

7. Dispositif de transmission de données (1) selon l'une quelconque des revendications précédentes, **caractérisé en ce qu'**un logiciel d'exploitation du dispositif de transmission de données (1), de préférence de l'équipement de vérification de données (10) ne peut être modifié.

8. Dispositif de transmission de données (1) selon l'une quelconque des revendications précédentes, **caractérisé en ce que** le dispositif de transmission de données (1) présente une mémoire de sécurité non inscriptible par le premier (2) et/ou le deuxième système de traitement de données (3), toutefois lisible.

9. Procédé de transmission de données avec un dispositif de transmission de données (1) selon l'une quelconque des revendications 1 à 8 depuis le premier système de traitement de données (2) sur le deuxième système de traitement de données (3), dans lequel la transmission est initiée par un utilisateur du premier et du deuxième système de traitement de données (2, 3) ou automatiquement, dans lequel ensuite une liaison à transmission de données est établie exclusivement entre l'équipement de stockage de données (7) et le premier système de traitement de données (2) par l'équipement commutateur de mémoire (5), dans lequel ensuite les données à transmettre sont transmises sur l'équipement de stockage de données (7), dans lequel ensuite exclusivement l'équipement de vérification de données (10) est relié à l'aide de l'équipement commutateur de données (5) à l'équipement de stockage de données (7) et l'équipement de vérification de données (10) vérifie les données stockées sur l'équipement de stockage de données (7), dans lequel l'équipement de vérification de données (10) amène l'équipement commutateur de mémoire (5) à établir une liaison filaire à transmission de données exclusivement entre l'équipement de stockage de données (7) et le deuxième système de traitement de données (3) par l'équipement commutateur de mémoire (5) quand les données remplissent les critères de contrôle spécifiés et dans lequel ensuite les données sont transmises par l'équipement de stockage de données (7) sur le deuxième système de traitement de données (3).

10. Procédé selon la revendication 9, **caractérisé en ce que** la transmission de données est initiée, ou est réalisée de manière automatisée depuis le premier système de traitement de données (2) vers l'équipement de stockage de données (7) et/ou la transmission de données est initiée, ou est réalisée de manière automatisée depuis l'équipement de stockage de données (7) vers le deuxième système de traitement de données (3).

11. Procédé selon l'une quelconque des revendications 9 ou 10, **caractérisé en ce que** les données sont cryptées au cours de la transmission entre le premier système de traitement de données (2) et le deuxième système de traitement de données (3) par le dispositif de transmission de données (1), dans lequel une clé est enregistrée aux fins du cryptage et du décryptage des données exclusivement dans le dispositif de transmission de données (1).

12. Ensemble de systèmes (4) avec un premier et un deuxième système de traitement de données (2, 3) et avec un dispositif de transmission de données (1) selon l'une quelconque des revendications 1 à 8, dans lequel le premier système de traitement de données (2) et le deuxième système de traitement de données (3) sont reliés l'un à l'autre de manière à transmettre des données par l'intermédiaire du dispositif de transmission de données (1).

13. Ensemble de systèmes (4) selon la revendication 12, **caractérisé en ce que** l'ensemble de systèmes (4) présente plusieurs premiers systèmes de traitement de données (2), qui peuvent être reliés respectivement par l'intermédiaire de l'équipement commutateur de stockage (5) à l'équipement de stockage de données (7) et qui peuvent échanger des données par l'intermédiaire du dispositif de traitement (1) avec le deuxième système de traitement de données (3).

14. Ensemble de systèmes (4) selon la revendication 12, **caractérisé en ce que** l'ensemble de systèmes (4) présente plusieurs premiers systèmes de traitement de données (2) et plusieurs dispositifs de transmission de données (1), dans lequel chaque premier système de traitement de données (2) est relié par l'intermédiaire d'un des plusieurs dispositifs de traitement de données (1) de manière à transmettre des données au deuxième système de traitement de bureau (3).

15. Ensemble de systèmes (4) selon l'une quelconque des revendications 12 à 14, **caractérisé en ce que** l'ensemble de systèmes (4) présente plusieurs deuxièmes systèmes de traitement de données (3), dans lequel chaque premier système de traitement de données (2) est relié par l'intermédiaire d'un ou de plusieurs dispositifs de transmission de données (1) de manière à transmettre des données à au moins un des deuxièmes systèmes de traitement de données (3).
